# EUROPEAN PATENT APPLICATION

(11) **EP 0 988 965 A2**
(43) Date of publication of application: **29.03.2000**
(21) Application number: 99306071.4
(22) Date of filing: 30.07.1999
(51) Int. Cl.: B32B 27/06, B32B 15/08, B32B 21/08

(54) **Polymeric foam compositions and method of making substrates made from such compositions and method of making products made from such substrates and method of making**

(30) Priority: 26.09.1998 US 161270
(71) Applicant: Premark RWP Holdings, Inc., Wilmington, Delaware 19801 (US)
(72) Inventor: Krejchi, Mark, Temple, Texas 76502 (US); Mafoti, Robson, Temple, Texas 76501 (US); Oriseh, Tony, Belton, Texas 76513 (US); Gonzales, Jim, Temple, Texas 76502 (US); Ingrim, Mike, Belton, Texas 76513 (US)
(74) Representative: W.P. Thompson & Co.

(57) **Abstract**

A polymeric foam composition is provided for use as a substrate (1) in decorative compositions having at least one decorative layer (2) on the substrate (1), wherein the substrate is prepared eg. by foaming a composition made of (i) a resin matrix of one or more polymers selected from acrylonitrile-butadiene-styrene (ABS) polymers, polycarbonates, polystyrenes, polyphenylene oxide ad polyvinyl chloride polymers, preferably obtained from recycled plastics. The resulting foam composition has physical and mechanical properties sufficient for its use in place of fiberboard or particle board in the preparation of various decorative products such as decorative laminate, microveneer decorative laminate, metal films, metal foils, metal sheets, solid surface materials, solid surface veneer, solid surface laminate, and solid surfacing dimensional laminate.

## Description

### BACKGROUND OF THE INVENTION

### 1. Field of the Invention

The present invention relates to polymer compositions, to methods of making such compositions, to substrates made from such compositions, to methods of making such substrates, to products made from such substrates, and to methods of making such products. In another aspect, the present invention relates to foamed polymer compositions, to methods of making such compositions, to substrates made from such compositions, to methods of making such substrates, to products made from such substrates, and to methods of making such products. In even another aspect, the present invention relates to foamed polymer compositions having suitable mechanical properties to be made into substrates useful for supporting decorative surfaces for incorporation into products such as building or construction materials, flooring, furniture, tabletops or countertops, and wall panels, to methods of making such compositions, to methods of making such substrates, and to methods of making such products. In still another aspect, the present invention relates to foamed polymer compositions having suitable mechanical properties to be made into substrates useful for supporting decorative surfaces, such as laminates, microveneer decorative laminate, metal products, solid surface materials, solid surface veneer, solid surface laminate, solid surfacing dimensional laminate, any or all of which may be incorporated into products such as building or construction materials, flooring, furniture, tabletops or countertops, and wall panels, to methods of making such compositions, to methods of making such substrates, and to methods of making such products.

### 2. Description of the Related Art

Conventional laminate products are well known in the art. They generally are prepared by laminating a decorative layer and one or more kraft paper layers together using various types of resins, such as melamine formaldehyde and phenolic resins. The resulting decorative laminate is then adhered to a substrate, usually of fiberboard or particle board. The thus prepared product is known as high pressure decorative laminate. Alternatively, low pressure decorative laminate is prepared by laminating a decorative layer, with or without an overlay layer, directly onto a fiberboard or particle board substrate, using the same type of resins used in high pressure decorative laminate. However, while the use of such wood based substrates provides the necessary rigidity for structural uses such as flooring and countertops, these wood based substrates are heavy and can warp in the presence of moisture.

One possible solution to these problems would be to use polymeric substrates for preparing laminates. However, polymeric materials tend to be considerably more expensive, especially those having the desired rigidity and performance characteristics for use in laminate applications.

Foamed polymers are known and are used in various structural end uses. The preparation of polymer foams and their conventional uses are described in Kirk Othmer Encyclopedia of Chemical Technology, 4^{th} Ed., vol. 11, John Wiley and Sons, NY, pp. 730-783 (1997), as well as the "Handbook of Polymeric Foams and Foam Technology", ed. By D. Klempner and K.C. Frisch, Hanser Publishers, NY (1991), the contents of both of which are hereby incorporated by reference.

Another problem that exists is the generation of polymeric wastes, either as manufacturing tailings or through the obsolescence of various commercial products using polymeric materials as the housings, supports and various internal parts of the product. Such products include things such as televisions, stereos, computers, printers, typewriters, etc. Due to the nature of these products and the rapid advancement of technology surrounding them, these types of products are being replaced with increasing frequency. A problem that then arises is how to dispose of the polymer based parts of these devices in an environmentally sound manner, as well as in an economically sound manner.

Accordingly, it would be useful to have a substrate material that overcomes the above disadvantages of wood based substrates, while having minimal costs. Further, if such a substrate is made of polymeric material, it would be advantageous to have a product that can be made from recycled polymers.

The present invention seeks to provide a polymer composition, a method of making same, a concentrate made from such composition, a method of making same, a derivative product and a method of making same.

By use of the present invention one or more of the following may be achieved:-
(i) a polymeric foam composition having sufficient rigidity and mechanical properties for use as a substrate in structural and decorative uses such as laminate flooring or decorative laminate.
(ii) a polymeric foam composition having the above properties which is prepared from recycled plastics.
(iii) a method of making a substrate from the above foam compositions.
(iv) a product comprising a member formed from the above foam compositions supporting a decorative member. Non-limiting examples for the decorative member include laminates, microveneer laminates, solid surface materials, solid surface veneer, solid surface laminate, solid surface dimensional laminate.
(v) a method of making the above product.

According to one embodiment of the present invention, there is provided a multilayer decorative product. The product includes a substrate comprising a polymer foam comprising a resin matrix of at least one polymer selected from the group consisting of acylonitrile-butadiene-styrene polymers, polycarbonates, polystyrenes, polyphenylene oxide and polyvinyl chloride polymers. The product further includes one or more decorative layers bonded to said substrate, wherein the decorative layer is selected from the group consisting of decorative laminate, microveneer decorative laminate, metal films, metal foils, metal sheets, solid surface materials, solid surface veneer, solid surface laminate, and solid surfacing dimensional laminate. In a more specific embodiment of this embodiment, the resin matrix comprises at least one member selected from the group consisting of fire retardant acrylonitrile-butadiene-styrene polymers and glass filled acrylonitrile-butadiene-styrene polymers. In a more specific embodiment of this embodiment, said resin matrix comprises recycled materials, preferably obtained by reclamation of plastic materials from an electronic device.

According to another embodiment of the present invention, there is provided a method for making the above described multilayer decorative product. The method generally includes affixing together a substrate comprising a polymer foam comprising a resin matrix of at least one polymer selected from the group consisting of acrylonitrile -butadiene-styrene polymers, polycarbonates, polystyrenes, polyphenylene oxide and polyvinyl chloride polymers, together with one or more decorative layers, wherein the decorative layer is selected from the group consisting of decorative laminate, microveneer decorative laminate, metal films, metal foils, metal sheets, solid surface materials, solid surface veneer, solid surface laminate, and solid surfacing dimensional laminate.

### BRIEF DESCRIPTION OF THE DRAWINGS

A more complete appreciation of the invention and many of the attendant advantages thereof will be readily obtained as the same becomes better understood by reference to the following detailed description when considered in connection with the accompanying drawing, wherein:

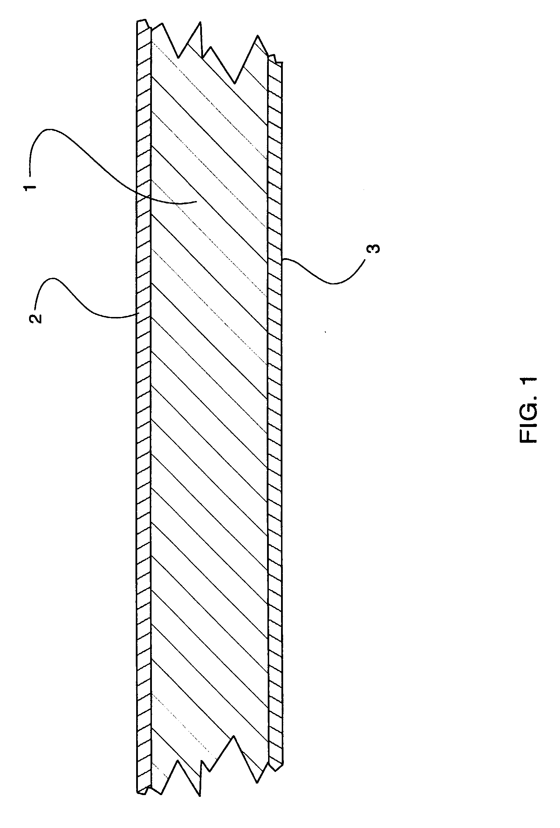

FIG. 1 shows a typical laminate construction showing the substrate (1), decorative laminate layer (2) and the backing layer (3).

### DETAILED DESCRIPTION OF THE INVENTION

The polymeric foam compositions of the present invention may be formed into substrates having the structural properties sufficient to permit use as the supporting member for decorative materials such as laminates, microveneer laminates, solid surface materials, solid surface veneer, solid surface laminate, solid surface dimensional laminate.

The polymeric foam substrate of the present invention can be prepared from any polymer that can be foamed, so long as the prepared foam has the structural and mechanical properties necessary for the end use desired. In particular, it is preferred that the substrate have a compression set that is approximately the same or better than conventional medium or high density fiberboard or particle board (wherein compression set is measured in accordance with ASTM F970, as thickness decrease as a function of compressive stress). Preferably this thickness decrease at 2000 psi is at most 0.01 in., more preferably at most 0.005 in., and most preferably at most 0.001 in. In addition, the polymeric foam substrate of the present invention preferably has a coefficient of linear thermal expansion (in accordance with ASTM D-696) of from 7 x 10⁻⁵ in/in/°F, more preferably from 2 x 10⁻⁵ to 0.5 x 10⁻⁵ in/in/°F, most preferably from 1 x 10⁻⁵ to 0.6 x 10⁻⁵ in/in/°F.

Preferably, the polymeric foam comprises one or more members selected from the group consisting of poly(acrylonitrile/butadiene/styrene) (hereafter referred to as ABS) resins such as flame retardant ABS resins and glass filled ABS resins; polycarbonate; high impact polystyrene (HIPS), polystyrene, polyphenylene oxide (PPO), and polyvinyl chloride (PVC). The polymer can be virgin polymer or recycled polymer. Preferably, the substrate foam is prepared from a commingled resin system containing, but not limited to, one or more of the above listed polymers. Further, these polymers can be filled or unfilled, although from an impact resistance and physical property standpoint, the filled polymers are best. In a most preferred embodiment, the polymer is obtained from reclaimed plastic casings and parts from electronics equipment, such as computers, printers, televisions, stereos, etc. This reclaimed plastic is obtained by removal of substantially all ferrous-based metals and other non-plastic parts from the electronics equipment, followed by granulation of the plastic. Within the context of the present invention, the term "substantially" means >95% of the original amount of ferrous based metals and other non-plastic parts in the electronics equipment, preferably >99% of the original amount. The reclaimed plastic is normally a mixture of two or more of the above noted preferred polymers, with 50% or more, preferably 75% or more, being ABS, with or without flame retardant or glass fillers.

The polymer used in preparing the polymeric foam of the present invention can be foamed using any conventional blowing agent, such as exothermic blowing agents, endothermic blowing agents or combinations thereof, so long as the cell size of the foam can be adjusted to provide the structural and mechanical properties required in the desired end use. The preparation of foamed polymers is known in the art and is described, for example, in the above-noted Kirk Othmer Encyclopedia of Chemical Technology and "Handbook of Polymeric Foams and Foam Technology."

Preferred exothermic blowing agents include azodicarbonamide blowing agents. The exothermic blowing agents tend to provide a larger cell size in the foam produced than the endothermic blowing agents. A preferred endothermic blowing agent is a combination of calcium carbonate (or bicarbonate) and carboxylic acid. Suitable carboxylic acids are known in the art of foam making and must be capable of helping initiate formation of CO₂ from the calcium carbonate or bicarbonate. Such carboxylic acids include, but are not limited to, acids such as citric acid. In high load end uses, such as laminate flooring, the use of only an exothermic blowing agent tends to provide a foam with insufficient resistance to compression due to the oversized cells. While the use of an endothermic blowing agent alone requires larger amounts of the blowing agent (thus increasing materials and processing costs), without the ability to generate the density reduction sufficient to reduce the overall weight of the foam to a desired level for handleability. Thus, in a preferred embodiment of the present invention, the blowing agent is a combination of an exothermic blowing agent and an endothermic blowing agent. In particular, the most preferred blowing agent is a combination of an azodicarbonamide blowing agent and CaCO₃ (or bicarbonate) /carboxylic acid. The determination of the amount of blowing agent needed and ratio of endothermic/exothermic blowing agents is within the skill of one of ordinary skill in the art of polymer foam preparation and depends on the final foam properties desired. Preferably, the blowing agent is used in an amount of up to 3% of the polymer, more preferably from 1 to 2% by weight of the polymer.

The polymer of the present invention can be used alone or with one or more fillers, in order to obtain the desired physical properties of the resulting foam. Preferably, the filler can be one or more conventional fillers, more preferably one or more fillers selected from the group consisting of calcium carbonate, talc, silica, glass fibers, alumina and wollastonite. These fillers also include surface treated fillers. Most preferably, the filler is surface treated calcium carbonate, commercially available as DF30T from Franklin Industrial Minerals, of Dalton, GA. The resin:filler ratio ranges from 100:0 to 30:70, preferably from 90:10 to 50:50, more preferably from 75:25 to 65:35.

In an illustrative embodiment, the reclaimed polymer is compounded with the filler surface treated calcium carbonate (DF30T) in a ratio of resin:CaCO₃ of 70:30. Compounded into a separate type of pellet is the blowing agent. This separate pellet can be prepared from the same resin that makes up the majority of the reclaimed polymer or from a different resin that is represent in the reclaimed polymer mixture. The blowing agent containing pellet is then added to the reclaim polymer/filler mixture in an amount sufficient to bring the blowing agent to a level of approximately 1.5%, based on the overall mixture. The resulting mixture can be directly extruded and blown. Alternatively, the blowing agent itself (in unpelletized form) can be added directly to the reclaim polymer/filler mixture in the extruder. The polymer is foamed to a density reduction level sufficient to meet the requirements of the desired end use. For non-load bearing uses, the polymer can be foamed to a density reduction of up to 75-80%. For load-bearing end uses, such as countertops and flooring applications, the polymer is preferably foamed to a density reduction of up to about 50%, mor preferably from 25-35% density reduction and most preferably about 30% density reduction. Density reduction, as used in the present invention, is the percentage by which the density of the foamed product is lower than the density of the non-foamed polymer.

The foamed polymer product of the present invention can be used as a substrate for a wide variety of end uses. In particular, the foam product of the present invention can be used as a replacement for fiberboard or particle board substrate in laminate products, such as high-wear laminate flooring and high pressure decorative laminate, such as used in kitchen countertops or tabletops.

The foam product of the present invention may also be used as a substrate for microveneer decorative laminate, disclosed in U.S. Patent Application Serial No. 09/082,872, filed May 21, 1998, herein incorporated by reference. Microveneer decorative laminate may generally be described as including a decorative layer that may be either a solid color or print decorative paper having a coating of resin on its wear surface, a resin impregnated glueable backing, and optionally, one or more resin impregnated core layers, and further optionally, one or more resin impregnated overlay layers. In one method of making microveneer decorative laminate, resin is first impregnated into overlay and partially cured. The overlay is positioned over decorative solid color or print paper that has not been impregnated with resin, and optionally along with one or more resin impregnated core sheets, and a resin impregnated backing sheet, all of which are laminated togther under heat and pressure. The resin content in the overlay is adjusted for providing the amount of resin needed for a wear resistant surface and for impregnating the decorative paper. In another method of making microveneer decorative laminate, resin is coated on the decorative surface of solid color decorative paper, which is laminated along with one or more optional resin impregnated core sheets and the resin impregnated backing sheet. The resin impregnates the decorative paper and is partially cured.

The foam product of the present invention may also be used as a substrate for metal products, decorative films, foils, sheets, or the like, made of metals.

The foam product of the present invention may also be used as a substrate for solid surface materials, typically polyacrylics containing various fillers. Commercially available products include Gibralter™ products sold by Wilsonart International, Inc.

The foam product of the present invention may also be used as a substrate for solid surface veneer, conventionally thinner solid surfacing materials, typically polyacrylics containing various fillers, such as the commercially available SSV™ products (1/8" thick) sold by Wilsonart International, Inc.

The foam product of the present invention may also be used as a substrate for solid surface laminate, that is, very thin solid surfacing products (<100 mil thick solid surfacing products), typically polyacrylics containing various fillers, which are disclosed in U.S. Patent Application Serial No. 08/899,118, filed July 23, 1997, herein incorporated by reference.

The foam product of the present invention may also be used as a substrate for solid surfacing dimensional laminate, disclosed in U.S. Patent Application Serial No. 09/161265, entitled "Solid Surfacing Dimensional Laminate, and Methods for Making and Using Same", by Peter C. Gaa, filed concurrently herewith, and herein incorporated by reference. Such a solid surfacing dimensional laminate has an enhanced appearance of pattern depth, provided by having overlaying layers of patterned decorative sheets positioned such that each pattern or part thereof is visible through the top of the final consolidated laminate. A plurality of patterned decorative layers are laid-up such that each pattern is off-set one from another making each pattern visible through the top decorative layer or overlay sheet of the formed laminate. As a non-limiting example, suppose that each pattern is a wood grain pattern, then during lay-up each wood grain pattern would be arranged so that the patterns do not substantially overlap, i.e., the patterns are offset in the xy plane one from the other.

In the practice of the present invention, the foamed polymer composition can be separately extruded then bonded to the selected decorative member, or where appropriate, the polymer foam composition of the present invention can be co-extruded with the desired decorative member to form a multilayer coextruded product.

By way of example, the use of the present invention foamed composition as a substrate for laminate flooring will be described. However, this should not be seen as limiting the present invention to laminate flooring applications, since those of skill in the art will readily recognize the wide ranging applicability of the foam composition of the present invention in many different end uses.

FIG. 1 shows a typical laminate product structure, showing the substrate (1), the decorative laminate layer (2) and the backing layer (3).

In preparing a laminate product, the decorative surface is conventionally prepared using a decorative paper layer having the desired pattern printed thereon. In the case of flooring, the pattern is often a woodgrain finish, although any pattern is possible. This decorative layer is impregnated with melamine-formaldehyde resin and laminated to one or more sheets of kraft paper, which have been impregnated with phenol formaldehyde resin. The surface of the decorative layer that will be exposed in the final product is usually prepared by bonding an overlay layer, typically a thin paper sheet impregnated with the same type of melamine formaldehyde resin. Preferably, for flooring applications, a filler is also included in the overlay in order to provide abrasion resistance and a non-slip surface on the final product. Suitable fillers include alumina, calcium carbonate, milled glass fibers, ground glass fibers, etc.

Once the decorative layer is prepared, it can be adhered to the polymer foam core composition of the present invention using conventional adhesives, non-limiting examples of which include polyvinyl acetate/urethane adhesives, polychloroprene contact adhesives, 1 component urethane adhesives, 2 component urethane adhesives, and other solvent based adhesive systems. Non-limiting examples of preferred adhesives include polyvinyl acetate/urethane adhesives, and 2-component urethane adhesives. The most preferred adhesive is a 2-component urethane adhesive. A non-limiting example of a commercially available 2-component adhesive from Morton International is Mor-Ad 695-28T as the hydroxyl terminated "A" component, and Mor-Ad 695-28 as the isocyanide "B" component

The bottom of the flooring section containing the polymer foam composition of the present invention is a conventional backer sheet used in high pressure decorative laminate and conventional laminate flooring. The backer sheet is prepare by laminating one or more sheets of kraft paper impregnated with melamine formaldehyde resin. The resulting laminate is also adhered to the underside of the polymer foam composition using a conventional adhesive as discussed above.

Obviously, additional modifications and variations of the present invention are possible in light of the above teachings. It is therefore to be understood that within the scope of the appended claims, the invention may be practiced otherwise than as specifically described herein.

## Claims

1. A multilayer decorative product comprising:
(a) a substrate a polymer foam comprising a resin matrix of at least two polymers selected from the group consisting of acylonitrilebutadiene-styrene polymers, polycarbonates, polystyrenes, polyphenylene oxide and polyvinyl chloride polymers; and
(b) one or more decorative layers bonded to said substrate, wherein the decorative layer is selected from the group consisting of decorative laminate, microveneer decorative laminate, metal films, metal foils, metal sheets, solid surface materials, solid surface veneer, solid surface laminate, and solid surfacing dimensional laminate.

2. A multilayer decorative product as claimed in claim 1, manufactured by a method characterized by affixing together the substrate and the decorative layer.

3. A multilayer decorative product as claimed in claim 1 or 2, wherein said resin matrix comprises at least one member selected from the group consisting of fire retardant acrylonitrile-butadiene- styrene polymers and glass filled acrylonitrile-butadiene-styrene polymers.

4. A multilayer decorative product as claimed in any one of the preceding claims, herein said resin matrix is characterized by at least one member selected from the group consisting of high impact polystyrenes.

5. A multilayer decorative product according to any of the preceding claims, wherein said resin matrix comprises recycled materials.

6. A multilayer docroative product as claimed in any one of the preceding claims, wherein said resin matrix is obtained by reclamation of plastic materials from electronic devices.

7. A multilayer decorative product as claimed in any one of the preceding claims, wherein said substrate has a decorative layer on each of two opposing sides of said substrate.

8. A multilayer decorative product as calimed in any one of the preceding claims, wherein the substrate is coextruded with the decorative layer.

9. A multilayer decorative product as claimed in any one of the preceding claims, wherein the substrate is bonded to said decorative layer utilizing an adhesive.

10. A multilayer decorative product as claimed in any one of the preceding claims, wherein said adhesive is selected from the group consisting of polyvinyl acetate/urethane adhesives, polychloroprene contact adhesives, 1 component urethane adhesives, 2 component urethane adhesives, and solvent based adhesive systems.

11. A multilayer decorative product as claimed in any one of the proceeding claims, wherein said adhesive is selected from the group consisting of polyvinyl acetate/urethane adhesives and 2 component urethane adhesives.

12. A method for making a multilayer decorative product, the method comprising:
(a) affixing together a substrate comprising a polymer foam comprising a resin matrix of at least two polymer selected from the group consisting of acrylonitrile-butadiene-styrene polymers, polycarbonates, polystyrenes, polyphenylene oxide and polyvinyl chloride polymers, together with
(b) one or more decorative layers, wherein the decorative layer is selected from the group consisting of decorative laminate, microveneer decorative laminate, metal films, metal foils, metal sheets, solid surface materials, solid surface veneer, solid surface laminate and solid surfacing dimensional laminate.

13. A polymer composition comprising at least two polymers selected from the group consisting of acylonitrilebutadiene-styrene polymers, polycarbonates, polystyrenes, polyphenylene oxide and polyvinyl chloride polymers.

14. A polymer composition as claimed in claim 13, which is in the form of a foam.

15. A method of making a polymer composition as claimed in claim 13 or 14 which comprises admixing said at least two polymers.

16. A method as claimed in claim 15, wherein said mixture is foamed.

17. A substrate comprising a polymer foam comprising a resin matrix of at least two polymers selected from the group consisting of acylonitrilebutadiene-styrene polymers, polycarbonates, polystyrenes, polyphenylene oxide and polyvinyl chloride polymers.

18. A method of making a substrate as claimed in claim 17 which comprises at least partially curing a composition as claimed in claim 13 or 14.
